# FASCICULE DE BREVET EUROPEEN

(11) **EP 3 755 893 B1**
(45) Date de publication et mention de la délivrance du brevet: **02.03.2022**
(21) Numéro de dépôt: 19719569.6
(22) Date de dépôt: 02.04.2019
(51) Int. Cl.: F02C 7/06, B64D 27/18, F02C 7/20, F02C 7/32, F01M 11/04

(54) **ENSEMBLE MOTEUR POUR AERONEF PRESENTANT UN CHEMIN D'ALIMENTATION D'UN RESERVOIR DE COMPARTIMENT INTER-VEINES D'UNE TURBOMACHINE**
FLUGZEUGTRIEBWERKSANORDNUNG MIT EINEM ZUFÜHRWEG ZU EINEM ZWISCHENSTROMKAMMERTANK EINES TURBINENMOTORS
AIRCRAFT ENGINE ASSEMBLY WITH A SUPPLY PATH TO AN INTER-FLOW COMPARTMENT TANK OF A TURBINE ENGINE

(30) Priorité: 04.04.2018 FR 1852926
(43) Date de publication de la demande: 30.12.2020
(73) Titulaire: SAFRAN AIRCRAFT ENGINES, 75015 Paris (FR)
(72) Inventeur: HELLEGOUARCH, Antoine Elie, 77550 MOISSY-CRAMAYEL (FR); EICHSTADT, Frédéric Paul, 77550 MOISSY-CRAMAYEL (FR); GARNAUD, Quentin Matthias Emmanuel, 77550 MOISSY-CRAMAYEL (FR)
(74) Mandataire: Brevalex
(86) Numéro de dépôt international: PCT/FR2019/050757
(87) Numéro de publication internationale: WO 2019/193274

(56) Documents cités:
- EP-A2- 1 170 207
- EP-A2- 1 908 929
- EP-B1- 1 170 207
- US-A1- 2004 216 461
- US-A1- 2013 291 514

## Description

### DOMAINE TECHNIQUE

La présente invention se rapporte à un ensemble moteur pour aéronef, comprenant une turbomachine à double flux, un mât d'accrochage de la turbomachine, ainsi que des moyens de raccordement entre la turbomachine et le mât. De manière classique, ces moyens de raccordement assurent la suspension de la turbomachine sous le mât, ainsi que la transmission des efforts de poussée en direction de ce même mât.

L'invention concerne plus particulièrement un tel ensemble moteur, dans lequel un compartiment inter-veines de la turbomachine loge un ou plusieurs réservoirs de lubrifiant. Une solution de ce type est par exemple connue du document FR 3 046 200 A1 ou du document US2013/291514 A1.

### ETAT DE LA TECHNIQUE ANTERIEURE

Sur les turbomachines à double flux, il est effectivement prévu un compartiment entre une veine primaire et une veine secondaire, ce compartiment étant habituellement dénommé compartiment inter-veines. Il loge de nombreux équipements, dont l'accessibilité est parfois rendue difficile en raison de la forte densité de ces équipements, dans un espace relativement restreint.

Cette problématique d'accessibilité peut se rencontrer pour un réservoir de lubrifiant agencé dans le compartiment inter-veines. En effet, le remplissage du réservoir s'avère parfois délicat, en raison de l'accès difficile dans cet environnement très dense.

Il existe par conséquent un besoin d'optimisation des conceptions existantes, dans le but de faciliter les opérations de remplissage du réservoir agencé dans le compartiment inter-veines.

### EXPOSÉ DE L'INVENTION

Pour répondre à ce besoin, l'invention a pour objet un ensemble pour aéronef comprenant une turbomachine à double flux ainsi qu'un mât d'accrochage de la turbomachine destiné à assurer l'accrochage de la turbomachine sur un élément de voilure de l'aéronef, l'ensemble comportant des bielles de reprise des efforts de poussée reliant la turbomachine au mât, la turbomachine présentant un compartiment inter-veines logeant au moins un réservoir de lubrifiant.

Selon l'invention, l'ensemble présente un chemin d'alimentation en lubrifiant relié fluidiquement au réservoir, ledit chemin passant par une zone intérieure creuse d'au moins l'une des deux bielles de reprise des efforts de poussée.

L'invention répond ainsi de manière astucieuse au besoin exprimé, en conférant à au moins l'une des deux bielles de reprise des efforts de poussée une fonction supplémentaire d'aide au remplissage du réservoir. En effet, en faisant en sorte que le chemin d'alimentation en lubrifiant passe par la zone intérieure creuse de la bielle concernée, le remplissage du réservoir peut avantageusement être réalisé depuis l'arrière de cette bielle, c'est-à-dire depuis une zone moins encombrée située à distance du compartiment inter-veines. Le remplissage s'en trouve ainsi facilité pour l'opérateur, sans pour autant nécessiter de changements importants sur les conceptions actuelles. Au contraire, l'un des avantages de l'invention réside dans l'utilisation des bielles existantes pour assurer le remplissage.

L'invention prévoit de préférence au moins l'une des caractéristiques optionnelles suivantes, prises isolément ou en combinaison.

Le réservoir de lubrifiant se situe en amont d'un corps haute pression de la turbomachine, et de préférence autour d'un compresseur basse pression appartenant à un corps basse pression de la turbomachine.

Une extrémité avant des bielles de reprise des efforts de poussée est raccordée sur un carter intermédiaire de la turbomachine, ou sur un élément de stator de la turbomachine situé en aval du carter intermédiaire. Cet élément de stator peut par exemple prendre la forme d'une structure annulaire fixée au carter intermédiaire, et se situant dans le compartiment inter-veines, en aval de ce carter intermédiaire.

Une extrémité arrière des bielles de reprise des efforts de poussée est agencée au droit d'un carter d'éjection des gaz de la turbomachine. Néanmoins, cette extrémité arrière pourrait se situer en amont ou en aval du carter d'éjection des gaz, sans sortir du cadre de l'invention.

Selon un premier mode de réalisation préféré, le chemin d'alimentation en lubrifiant est en partie défini par un conduit de raccord, de préférence souple, raccordant le réservoir de lubrifiant à une extrémité avant de la bielle de reprise des efforts de poussée, le chemin d'alimentation en lubrifiant étant alors également en partie défini par ladite zone intérieure creuse s'étendant entre l'extrémité avant et une extrémité arrière de cette bielle. Dans ce mode, l'extrémité avant de la bielle de reprise des efforts de poussée comporte de préférence un orifice de sortie de lubrifiant sur lequel est raccordé ledit conduit de raccord, et cette extrémité avant comporte une chape présentant deux oreilles entre lesquelles débouche l'orifice de sortie de lubrifiant.

Selon un second mode de réalisation préféré, le chemin d'alimentation en lubrifiant est en partie défini par un conduit d'alimentation traversant au moins en partie ladite zone intérieure creuse de la bielle, et de préférence en traversant l'intégralité de celle-ci.

Quel que soit le mode de réalisation envisagé, l'ensemble comporte de préférence des moyens anti-retour de lubrifiant agencés le long du chemin d'alimentation en lubrifiant, en aval de la bielle de reprise des efforts de poussée. Cela évite les risques que la bielle reste remplie de lubrifiant durant une partie du vol.

Enfin, le réservoir de lubrifiant est préférentiellement équipé d'un système de jauge de niveau de lubrifiant, et l'ensemble comprend en outre un indicateur de remplissage déporté du réservoir, et recevant des signaux émis par le système de jauge. Cet indicateur permet à l'opérateur d'avoir plus facilement accès à l'information sur le niveau du réservoir, durant le remplissage effectué à distance de ce dernier.

L'invention a également pour objet un procédé de remplissage d'un réservoir de lubrifiant d'un tel ensemble, mis en œuvre en injectant du lubrifiant via le chemin d'alimentation passant par la zone intérieure creuse d'au moins l'une des deux bielles de reprise des efforts de poussée.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, selon l'invention ;
- la figure 2 représente une vue en coupe longitudinale montrant de façon plus détaillée de la turbomachine équipant l'ensemble montré sur la figure précédente ;
- la figure 3 représente une vue agrandie en coupe d'une partie de la turbomachine montrée sur la figure précédente, en coopération avec l'une des bielles de reprise des efforts de poussée, selon un premier mode de réalisation préféré de l'invention ;
- la figure 3a représente une vue en perspective de la bielle montrée sur la figure précédente ;
- la figure 4 représente une vue similaire à celle de la figure 3, montrant une alternative de réalisation ; et
- la figure 5 représente une vue de côté d'une partie de la bielle montrée sur les figures précédentes, destinée à s'inscrire dans un second mode de réalisation préféré de l'invention.

### EXPOSÉ DÉTAILLÉ DE MODES DE RÉALISATION PRÉFÉRÉS

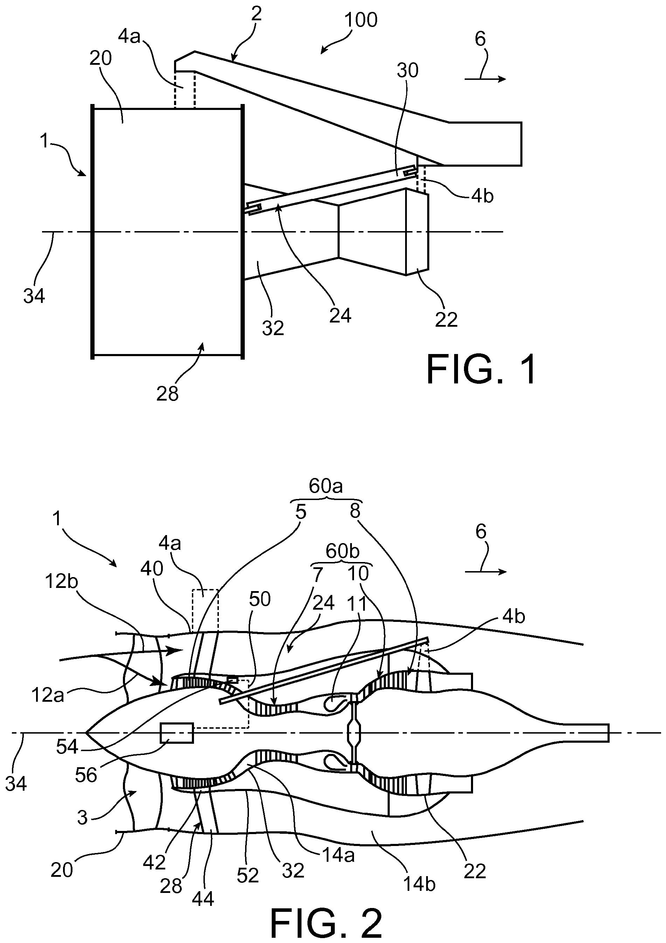

En référence à la figure 1, il est représenté un ensemble moteur 100 pour aéronef, selon l'invention. Cet ensemble 100 comporte une turbomachine 1 à double flux, un mât d'accrochage 2 de la turbomachine, ainsi que des moyens de raccordement entre la turbomachine et le mât.

Dans toute la description qui va suivre, par convention, les termes « amont » et « aval » sont à considérer en rapport avec une direction principale d'écoulement des gaz au travers de la turbomachine, cette direction étant représentée schématiquement par la flèche 6. En outre, les termes « avant » et « arrière » sont à considérer par rapport à une direction opposée, correspondant à un sens d'avancement de l'aéronef suite à la poussée exercée par la turbomachine.

Le mât 2 est destiné à assurer l'accrochage de la turbomachine 1 sur un élément de voilure de l'aéronef (non représenté), et de préférence sous une aile de cet aéronef. Sur la figure 1, seule une structure primaire du mât a été représentée. Egalement dénommée structure rigide, cette structure primaire permet la transmission au caisson de voilure des efforts statiques et dynamiques engendrés par la turbomachine. Les autres éléments constitutifs nonreprésentés du mât 2, du type structure secondaire assurant la ségrégation et le maintien des systèmes tout en supportant des carénages aérodynamiques, sont des éléments classiques similaires connus de l'art antérieur.

Le mât 2 se trouve ainsi intercalé verticalement entre la turbomachine 1 à double flux, et l'élément de voilure de l'aéronef. Les moyens de raccordement entre ce mât et la turbomachine présentent des fonctions distinctes. Tout d'abord, il est prévu des suspensions de la turbomachine, par exemple une attache moteur avant 4a ainsi qu'une attache moteur arrière 4b. Ces deux attaches 4a, 4b relient par exemple la structure primaire du mât 2 respectivement à un carter de soufflante 20 de la turbomachine, et à un carter d'éjection des gaz 22. Alternativement, l'attache moteur avant 4a peut être fixée sur un carter intermédiaire 28 de la turbomachine, situé entre le carter de soufflante 20 et un carter central 32, également dénommé carter core.

De plus, ces moyens de raccordement comportent deux bielles de reprise des efforts de poussée 24 (une seule étant visible sur la vue de côté de la figure 1). Ces bielles 24 sont dédiées à la transmission des efforts moteurs de poussée en direction du mât 2. Elles sont agencées symétriquement par rapport à un plan vertical médian de l'ensemble moteur 100. Chacune d'elles présente une extrémité avant 26 raccordée sur le carter intermédiaire 28 de la turbomachine ou bien sur un autre élément de stator agencé en aval de ce carter 28, ainsi qu'une extrémité arrière 30 raccordée sur l'attache moteur arrière 4b, ou bien à proximité de celle-ci et directement sur la structure primaire du mât 2.

La figure 2 représente une vue plus détaillée de la turbomachine 1, d'axe central longitudinal 34. Il s'agit ici d'un turboréacteur à double flux et à double corps. La turbomachine 1 comprend, d'amont en aval selon une direction principale 6 d'écoulement des gaz, une soufflante 3, un compresseur basse pression 5, un compresseur haute pression 7, une chambre de combustion 11, une turbine haute pression 10 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 5, 7, la chambre de combustion 11, et les turbines 10, 8. Le flux secondaire 12b s'écoule quant à lui dans une veine secondaire 14b délimitée radialement vers l'extérieur par le carter de soufflante 20, à l'amont de la turbomachine. Cette délimitation se poursuit vers l'aval par une virole extérieure 40 de carter intermédiaire, fixé sur l'extrémité arrière du carter de soufflante 20. A cet égard, il est noté que de manière conventionnelle, le carter intermédiaire 28 présente non seulement la virole 40, mais également un moyeu 42, ainsi que des bras radiaux 44 reliant le moyeu 42 à la virole extérieure 40. Le moyeu 42 est relié au carter central 32, qui s'étend vers l'aval à partir de ce moyeu. Ce dernier forme une délimitation amont d'un compartiment inter-veines 50, logeant une pluralité d'équipements. Le compartiment 50 est ainsi délimité radialement vers l'intérieur par le carter central 32, et radialement vers l'extérieur par un ou plusieurs capotages 52 formant la délimitation interne de la veine secondaire 14b.

Sur les nombreux équipements logés dans la partie amont du compartiment inter-veines 50, seul un réservoir de lubrifiant 54 a été représenté, et ce pour des raisons de clarté de la figure. Ce réservoir 54 est destiné à fournir du lubrifiant aux éléments environnants, via une ou plusieurs pompes également logées dans le compartiment 50. C'est notamment le cas pour un réducteur 56, entraîné par un corps basse pression 60a comprenant le compresseur 5 et la turbine 8. De manière classique, le corps basse pression 60a s'ajoute à un corps haute pression 60b comportant le compresseur 7 et la turbine 10. Le réducteur 56 est quant à lui prévu pour entraîner la soufflante 3, afin que celle-ci tourne à une vitesse de rotation inférieure à celle du corps basse pression 60a.

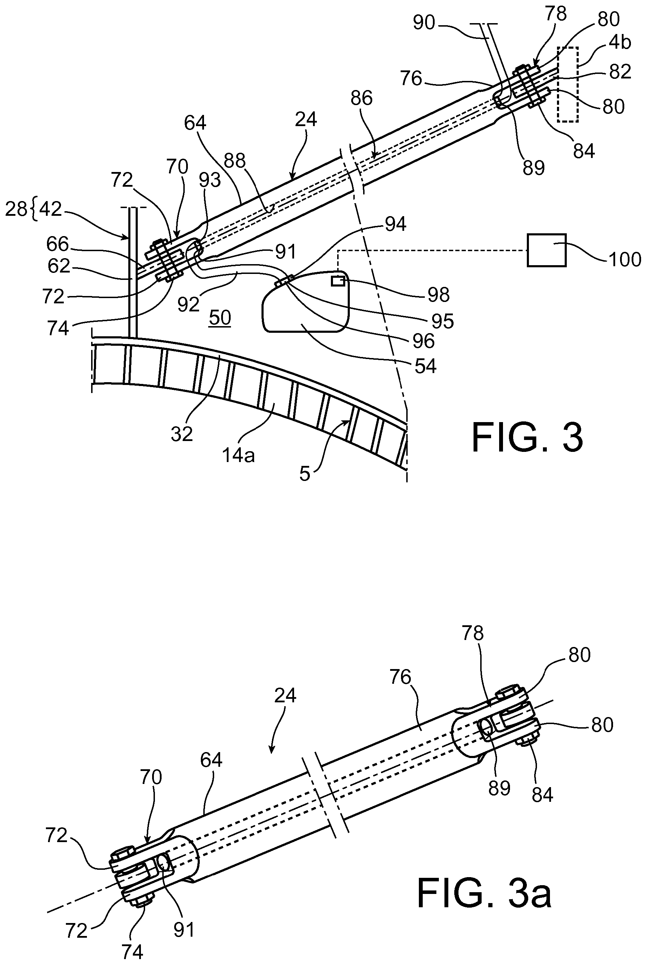

En référence à présent aux figures 3 et 3a, le réservoir de lubrifiant 54 se trouve proche d'un flasque aval 62 du moyeu 42 de carter intermédiaire. Dans le compartiment inter-veines 50, le réservoir 54 est agencé au niveau du compresseur basse pression 5, c'est-à-dire que selon l'axe longitudinal de la turbomachine, le réservoir occupe un espace situé dans une tranche axiale de la turbomachine qui correspond à l'occupation axiale du compresseur basse pression, en amont du corps haute pression 60b. Le réservoir 54 peut être partiellement annulaire, c'est-à-dire qu'il s'étend sur une partie de la circonférence autour du compresseur basse pression 5, de façon analogue au réservoir de lubrifiant décrit dans le document FR 3 046 200 A1. L'encombrement radial du réservoir peut être ainsi limité, sans compromettre la contenance.

C'est sur le flasque 62 que se raccorde une extrémité avant 64 de chaque bielle 24 de reprise des efforts de poussée, en étant articulée, de préférence via une rotule (non représentée), sur une ferrure 66 solidaire de ce flasque 62. L'extrémité avant 64 de la bielle comporte une chape 70 dont les deux oreilles 72 se situent de part et d'autre de la ferrure 66, en étant traversées par un axe d'articulation 74 portant la rotule.

De manière analogue, une extrémité arrière 76 de la bielle 24 comporte une chape 78 dont les deux oreilles 80 se situent de part et d'autre d'un palonnier 82, lui-même monté sur l'attache moteur arrière 4b. Un axe d'articulation 84, portant de préférence une rotule (non représentée), traverse le palonnier 82 ainsi que les deux oreilles de chape 80. Ainsi, cette extrémité arrière 76 se situe au droit du carter d'éjection des gaz représenté sur la figure 1, en étant située plus haute que l'extrémité avant de la bielle.

L'une des particularités de l'invention réside dans le fait qu'il est prévu un chemin d'alimentation en lubrifiant 86 relié fluidiquement au réservoir 54, afin de pouvoir opérer un remplissage à distance de ce dernier. De plus, ce chemin 86 passe par une zone intérieure creuse 88 d'au moins l'une des deux bielles 24, et de préférence par la zone 88 de l'une des deux bielles seulement, qui est ainsi fonctionnalisée de manière particulièrement astucieuse.

Plus précisément, dans ce premier mode de réalisation préféré, le chemin 86 débute au niveau d'un orifice d'entrée de lubrifiant 89, débouchant au niveau de l'extrémité arrière 76 de la bielle 24, entre les deux oreilles de chape 80. Eventuellement, le chemin 86 débute encore plus en amont, par exemple par un conduit souple 90 raccordé sur l'orifice d'entrée 89. Ce conduit 90 peut assurer une liaison fluidique entre la bielle 24 et une partie du mât. Il est par exemple configuré de sorte à pouvoir coopérer à son extrémité opposée avec une coupelle de remplissage (non représentée).

Par conséquent, lorsqu'un opérateur souhaite remplir le réservoir 54, il injecte le lubrifiant par l'orifice d'entrée 89 de la bielle 24, ou bien par un organe situé plus en amont, comme une coupelle de remplissage communiquant avec cet orifice 89. A l'opposé de cet orifice, l'extrémité avant 64 de la bielle comporte un orifice de sortie 91 débouchant entre les deux oreilles de chape 72. La zone intérieure creuse 88 s'étend entre ces deux orifices 89, 91, en formant un passage s'étendant ainsi tout le long de la bielle, de préférence en étant centré sur un axe de celle-ci. Par exemple, la section de ce passage peut être circulaire, comme cela est représenté sur les figures 3 et 3a. Dans ce premier mode de réalisation préféré, c'est la zone intérieure creuse 88 qui définit elle-même une partie du chemin d'alimentation en lubrifiant 86.

Ce chemin 86 est également défini par un conduit de raccord souple 92, dont une extrémité se raccorde sur l'orifice de sortie 91 de la bielle, par exemple via un raccord vissé 93 ou un élément similaire. Ce conduit 92 permet d'être courbé dans la zone restreinte délimitée entre l'orifice de sortie 91 et l'axe d'articulation 74, afin de s'extraire de cette zone en cheminant entre les deux oreilles de chape 72, pour ensuite s'étendre en direction du réservoir 54. En effet, à une extrémité opposée de ce conduit 92, un autre raccord 94 permet de le fixer sur un orifice de remplissage 95 prévu sur le réservoir. Le chemin 86 s'achève ainsi par cet autre raccord 94, qui peut intégrer un clapet anti-retour 96 afin d'éviter les éventuelles remontées de lubrifiant dans le chemin 86, au cours du fonctionnement de la turbomachine. Le clapet 96, ou tout autre moyen analogue, peut être agencé autre part le long de chemin 86, de référence en aval de l'orifice de sortie 91 prévu sur la bielle.

Lors d'un remplissage du réservoir 54, l'opérateur injecte le lubrifiant par l'entrée du chemin 86 pour qu'il s'écoule ensuite par gravité dans la zone intérieure creuse 88, puis dans le conduit de raccord 92 jusqu'au réservoir 54 situé à distance de l'opérateur. Pour améliorer la maîtrise de ce remplissage, le réservoir est équipé d'un système de jauge de niveau de lubrifiant 98, qui communique par une liaison sans fil avec un indicateur de remplissage déporté du réservoir. Cet indicateur 100 est de préférence déporté vers l'aval, par exemple à proximité de l'orifice d'entrée 89 de la bielle, afin d'informer au mieux l'opérateur sur le niveau de remplissage du réservoir. L'indicateur 100 reçoit les signaux émis par le système de jauge 98, et émet lui-même au moins un signal renseignant l'opérateur sur le niveau remplissage. Il peut s'agir d'un signal sonore de fin de remplissage, ou bien simplement d'un affichage déporté du niveau de remplissage.

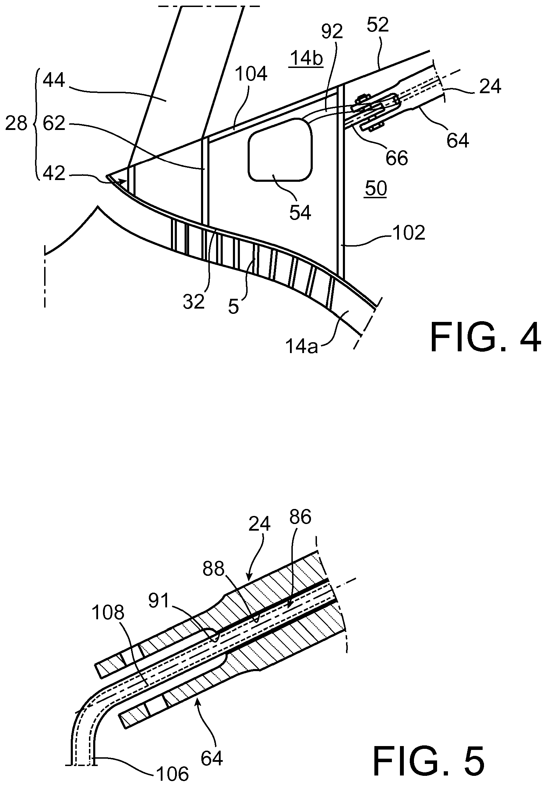

Selon une alternative de réalisation montrée sur la figure 4, l'extrémité avant 64 de chaque bielle 24 n'est pas raccordée directement sur le flasque aval 62 du moyeu 42 de carter intermédiaire, mais montée sur un élément de stator déporté vers l'aval. Il s'agit ici d'un anneau 102 centrée sur l'axe de la turbomachine, et logé dans le compartiment inter-veines 50 en aval du réservoir 54. La périphérie intérieure de l'anneau 102 est fixée au carter central 32, et sa périphérie extérieure est reliée par des bras axiaux 104 au flasque aval 62.

C'est alors cet anneau de stator 102 qui porte la ferrure 66, sur laquelle est articulée l'extrémité avant 64 de la bielle 24.

Enfin, la figure 5 représente un second mode de réalisation préféré, dans lequel le chemin d'alimentation en lubrifiant 86 est défini par un conduit d'alimentation 106 qui traverse au moins une partie de la zone intérieure creuse 88 de la bielle 24, et de préférence l'intégralité de cette zone. Ainsi, il n'est plus prévu de raccord au niveau de l'orifice de sortie 91 de la bielle, puisque le conduit d'alimentation 106 peut se poursuivre vers l'aval, par exemple jusqu'au réservoir. Du côté opposé, ce conduit 106 s'étend jusqu'à l'orifice d'entrée de la zone 88, ou au-delà de cet orifice. Au niveau de la bielle 24, le chemin d'alimentation en lubrifiant 86 n'est donc plus directement défini par la paroi de la zone intérieure creuse 88, mais par le passage intérieur 108 du conduit d'alimentation 106 traversant cette même zone 88.

Bien entendu, diverses modifications peuvent être apportées par l'homme du métier à l'invention qui vient d'être décrite, uniquement à titre d'exemples non limitatifs, et dont la portée est définie par les revendications annexées.

## Revendications

1. Ensemble moteur (100) pour aéronef comprenant une turbomachine à double flux (1) ainsi qu'un mât d'accrochage (2) de la turbomachine destiné à assurer l'accrochage de la turbomachine sur un élément de voilure de l'aéronef, l'ensemble comportant des bielles de reprise des efforts de poussée (24) reliant la turbomachine au mât, la turbomachine présentant un compartiment inter-veines (50) logeant au moins un réservoir de lubrifiant (54),
**caractérisé en ce qu'**il présente un chemin d'alimentation en lubrifiant (86) relié fluidiquement au réservoir (54), ledit chemin (86) passant par une zone intérieure creuse (88) d'au moins l'une des deux bielles de reprise des efforts de poussée (24).

2. Ensemble selon la revendication 1, **caractérisé en ce que** le réservoir de lubrifiant (54) se situe en amont d'un corps haute pression (60b) de la turbomachine, et de préférence au niveau d'un compresseur basse pression (5) appartenant à un corps basse pression (60a) de la turbomachine.

3. Ensemble selon la revendication 1 ou la revendication 2, **caractérisé en ce qu'**une extrémité avant (64) des bielles de reprise des efforts de poussée est raccordée sur un carter intermédiaire (28) de la turbomachine, ou sur un élément de stator (102) de la turbomachine situé en aval du carter intermédiaire.

4. Ensemble selon l'une quelconque des revendications précédentes, **caractérisé en ce qu'**une extrémité arrière (76) des bielles de reprise des efforts de poussée est agencée au droit d'un carter d'éjection des gaz (22) de la turbomachine.

5. Ensemble selon l'une quelconque des revendications précédentes, **caractérisé en ce que** le chemin d'alimentation en lubrifiant (86) est en partie défini par un conduit de raccord (92), de préférence souple, raccordant le réservoir de lubrifiant (54) à une extrémité avant (64) de la bielle de reprise des efforts de poussée (24), et **en ce que** le chemin d'alimentation en lubrifiant (86) est également en partie défini par ladite zone intérieure creuse (88) s'étendant entre l'extrémité avant (64) et une extrémité arrière (76) de cette bielle.

6. Ensemble selon la revendication 5, **caractérisé en ce que** l'extrémité avant (64) de la bielle de reprise des efforts de poussée (24) comporte un orifice de sortie de lubrifiant (89) sur lequel est raccordé ledit conduit de raccord (92), et **en ce que** cette extrémité avant comporte une chape (70) présentant deux oreilles (72) entre lesquelles débouche l'orifice de sortie de lubrifiant (89).

7. Ensemble selon l'une quelconque des revendications 1 à 4, **caractérisé en ce que** le chemin d'alimentation en lubrifiant (86) est en partie défini par un conduit d'alimentation (106) traversant au moins en partie ladite zone intérieure creuse (88) de la bielle (24).

8. Ensemble selon l'une quelconque des revendications précédentes, **caractérisé en ce qu'**il comporte des moyens anti-retour de lubrifiant (96) agencés le long du chemin d'alimentation en lubrifiant (86), en aval de la bielle de reprise des efforts de poussée (24).

9. Ensemble selon l'une quelconque des revendications précédentes, **caractérisé en ce que** le réservoir de lubrifiant (54) est équipé d'un système de jauge de niveau de lubrifiant (98), et **en ce que** l'ensemble comprend en outre un indicateur de remplissage (100) déporté du réservoir, et recevant des signaux émis par le système de jauge (98).

10. Procédé de remplissage d'un réservoir de lubrifiant d'un ensemble (100) selon l'une quelconque des revendications précédentes, **caractérisé en ce qu'**il est mis en œuvre en injectant du lubrifiant via le chemin d'alimentation (86) passant par la zone intérieure creuse (88) d'au moins l'une des deux bielles de reprise des efforts de poussée (24).

## Patentansprüche

1. Triebwerkseinheit (100) für ein Luftfahrzeug, die eine Turbomaschine umfasst mit zweiflutigem Antrieb (1) sowie einem Aufhängungsmast (2) der Turbomaschine, der dazu dient, die Aufhängung der Turbomaschine an einem Flügelelement des Luftfahrzeugs zu gewährleisten, wobei die Einheit Pleuelstangen (24) zur Aufnahme von Schubkräften umfasst, die die Turbomaschine mit dem Mast verbinden, wobei die Turbomaschine mit einem Zwischenschaufelraum (50) ausgestattet ist, in dem mindestens ein Schmiermittelbehälter (54) untergebracht ist,
**dadurch gekennzeichnet, dass** er einen Schmiermittelzufuhrweg (86) aufweist, der mit dem Vorratsbehälter (54) fluidisch verbunden ist, wobei dieser Zufuhrweg (86) durch einen hohlen Innenbereich (88) bis zu mindestens einer der beiden Pleuelstangen (24) zur Aufnahme von Schubkräften führt.

2. Einheit nach Anspruch 1, **dadurch gekennzeichnet, dass** sich der Schmiermittelbehälter (54) stromaufwärts eines Hochdruckkörpers (60b) der Turbomaschine befindet, und zwar vorzugsweise auf Höhe eines Niederdruckverdichters (5), der zu einem Niederdruckkörper (60a) der Turbomaschine gehört.

3. Einheit nach Anspruch 1 oder 2, **dadurch gekennzeichnet, dass** ein vorderes Ende (64) der Pleuelstangen zur Aufnahme von Schubkräften mit einem Zwischengehäuse (28) der Turbomaschine oder einem stromabwärts des Zwischengehäuses liegenden Statorelement (102) der Turbomaschine verbunden ist.

4. Einheit nach einem der vorhergehenden Ansprüche, **dadurch gekennzeichnet, dass** ein hinteres Ende (76) der Pleuelstangen zur Aufnahme von Schubkräften an einem Gasauslassgehäuse (22) der Turbomaschine angeordnet ist.

5. Einheit nach einem der vorhergehenden Ansprüche, **dadurch gekennzeichnet, dass** der Schmiermittelzufuhrweg (86) teilweise durch eine Verbindungsleitung (92) definiert ist, welche vorzugsweise eine flexible Leitung ist und den Schmiermittelvorrat (54) mit einem vorderen Ende (64) der Pleuelstange (24) zur Aufnahme von Schubkräften verbindet, und dass der Schmiermittelzufuhrweg (86) ebenfalls teilweise durch den hohlen Innenbereich (88) definiert ist, der sich zwischen dem vorderen Ende (64) und einem hinteren Ende (76) dieser Pleuelstange erstreckt.

6. Einheit nach Anspruch 5, **dadurch gekennzeichnet, dass** das vordere Ende (64) der Pleuelstange (24) zur Aufnahme von Schubkräften eine Schmiermittelauslassöffnung (89) aufweist, an die die Verbindungsleitung (92) angeschlossen ist, und dass dieses vordere Ende eine Kappe (70) mit zwei Ohren (72) aufweist, zwischen denen der Schmiermittelauslass (89) mündet.

7. Einheit nach einem der Ansprüche 1 bis 4, **dadurch gekennzeichnet, dass** der Schmiermittelzufuhrweg (86) teilweise durch eine Zufuhrleitung (106) definiert ist, die zumindest teilweise durch den hohlen Innenbereich (88) der Pleuelstange (24) verläuft.

8. Einheit nach einem der vorhergehenden Ansprüche, **dadurch gekennzeichnet, dass** sie eine Schmiermittelrücklaufsperre (96) aufweist, die entlang des Schmiermittelzufuhrweges (86) stromabwärts der Pleuelstange (24) zur Aufnahme von Schubkräften angeordnet ist.

9. Einheit nach einem der vorhergehenden Ansprüche, **dadurch gekennzeichnet, dass** der Schmiermittelbehälter (54) mit einem Schmiermittelstand-Messsystem (98) ausgestattet ist, und dass die Einheit ferner eine Füllstandsanzeige (100) umfasst, die vom Behälter entfernt ist und Signale empfängt, die vom Messsystem (98) ausgesendet werden.

10. Verfahren zum Befüllen eines Schmiermittelbehälters einer Einheit (100) nach einem der vorhergehenden Ansprüche, **dadurch gekennzeichnet, dass** es durch Einspritzen von Schmiermittel über den Zufuhrweg (86) zustande kommt, der durch den hohlen Innenbereich (88) bis zu mindestens einer der beiden Pleuelstangen (24) zur Aufnahme von Schubkräften führt.

## Claims

1. An aircraft engine assembly (100) comprising a dual flow turbomachine (1) as well as an attachment pylon (2) for the turbomachine for attaching the turbomachine to a wing element of the aircraft, the assembly including thrust load pick-up rod (24) interconnecting the turbomachine to the pylon, the turbomachine having an inter-flow compartment (50) accommodating at least one lubricant tank (54),
**characterised in that** it has a lubricant supply path (86) fluidly interconnected to the tank (54), said path (86) passing through a hollow internal zone (88) of at least one of both thrust load pick-up rods (24).

2. The assembly according to claim 1, **characterised in that** the lubricant tank (54) is located upstream of a high pressure spool (60b) of the turbomachine, and preferably at a low pressure compressor (5) belonging to a low pressure spool (60a) of the turbomachine.

3. The assembly according to claim 1 or claim 2, **characterised in that** a front end (64) of the thrust load pick-up rods is connected to an intermediate casing (28) of the turbomachine, or to a stator element (102) of the turbomachine located downstream of the intermediate casing.

4. The assembly according to any of the previous claims, **characterised in that** a rear end (76) of the thrust load pick-up rods is arranged flush with a gas exhaust casing (22) of the turbomachine.

5. The assembly according to any of the previous claims, **characterised in that** the lubricant supply path (86) is partly defined by a preferably flexible connector duct (92), connecting the lubricant tank (54) to a front end (64) of the thrust load pick-up rod (24), and **in that** the lubricant supply path (86) is also partly defined by said hollow internal zone (88) extending between the front end (64) and a rear end (76) of this rod.

6. The assembly according to claim 5, **characterised in that** the front end (64) of the thrust load pick-up rod (24) includes a lubricant outlet port (89) to which said connector duct (92) is connected, and **in that** this front end includes a fork (70) having two lugs (72) between which the lubricant outlet port (89) opens.

7. The assembly according to any of claims 1 to 4, **characterised in that** the lubricant supply path (86) is partly defined by a supply duct (106) at least partly passing through said hollow internal zone (88) of the rod (24).

8. The assembly according to any of the previous claims, **characterised in that** it includes lubricant one-way means (96) arranged along the lubricant supply path (86), downstream of the thrust load pick-up rod (24).

9. The assembly according to any of the previous claims, **characterised in that** the lubricant tank (54) is fitted with a lubricant level gauge system (98), and **in that** the assembly further comprises a fill indicator (100) offset from the tank, and receiving signals emitted by the gauge system (98).

10. A method for filling a lubricant tank of an assembly (100) according to any of the previous claims, **characterised in that** it is implemented by injecting lubricant via the supply path (86) passing through the hollow internal zone (88) of at least one of both thrust load pick-up rods (24).
